# EUROPÄISCHE PATENTANMELDUNG

(11) **EP 2 269 786 A1**
(43) Veröffentlichungstag der Anmeldung: **05.01.2011**
(21) Anmeldenummer: 10405106.5
(22) Anmeldetag: 25.05.2010
(51) Int. Cl.: B27B 17/00, B23D 59/00

(54) **Vorrichtung zum Zuschneiden von Baumaterial**

(30) Priorität: 29.06.2009 CH 10072009; 03.02.2010 CH 1252010
(71) Anmelder: Graf, Rudolf, 1796 Courgevaux (CH)
(72) Erfinder: Graf, Rudolf, 1796 Courgevaux (CH)
(74) Vertreter: Gachnang, Hans Rudolf

(57) **Zusammenfassung**

Die Vorrichtung (1) zum Schneiden von Baumaterial umfasst einen Sockelrahmen (3) sowie einen Portalrahmen (19) sowie einen Werkzeugträger (25), der in vertikaler Richtung längs einer Führung (23) verschiebbar angeordnet ist. Die Schneidvorrichtung (27) kann auf dem Werkzeugträger (25) verschwenkt und in jeder Schwenklage festgesetzt werden. Positionier- (29) und Spannmittel (39) halten ein Werkstück (47) an den Portalrahmen (19) angepresst fest.

## Beschreibung

Gegenstand der Erfindung ist eine Vorrichtung zum Zuschneiden von Baumaterial gemäss Oberbegriff des Patentanspruchs 1.

Baumaterialien, insbesondere Isolationsstoffe, die in grossformatiger Plattenform auf die Baustelle angeliefert werden, müssen auf genaue Masse und Winkel zwischen den Flächen zugeschnitten werden. Insbesondere müssen die Schnitte eine saubere Schnittfläche aufweisen, um einen spielfreien Anschluss an benachbarte Platten zu gewähren und dadurch Lücken, die einen Durchtritt von Luft ermöglichen, zu vermeiden. Oft sind Schnitte, die nicht rechtwinklig zur Oberfläche der Platten verlaufen, notwendig, beispielsweise in einem Winkel von 45°. Solche sind bisher nur mit Mühe exakt herzustellen.

Auch weitere Leichtbaustoffe, wie Backsteine, Faserzementsteine und dergleichen, müssen an die Gegebenheiten angepasst werden.

Eine Aufgabe der vorliegenden Erfindung besteht nun darin, eine Vorrichtung zu schaffen, mit der auch voluminöse, faserige und/oder poröse Baustoffplatten oder -klötze beliebiger Grösse exakt auf vorgegebene Masse und Winkel zugeschnitten werden können.

Eine weitere Aufgabe der Erfindung besteht darin, die Vorrichtung derart auszubilden, dass sie durch Handwerker leicht mit Kleinfahrzeugen transportierbar und am Benutzungsort, z.B. der Baustelle, aufstell- und einsetzbar ist.

Gelöst wird diese Aufgabe durch eine Vorrichtung gemäss den Merkmalen des Patentanspruchs 1.

Vorteilhafte Ausgestaltungen der Vorrichtung sind in den abhängigen Ansprüchen umschrieben.

Die erfindungsgemässe Vorrichtung ist sehr einfach im Aufbau und daher kostengünstig in der Herstellung. Es können handelsübliche Werkzeuge, wie ein motorisch angetriebener Fuchsschwanz oder eine Pendelsäge oder auch eine Kettensäge, eingesetzt werden. Dabei spielt es keine Rolle, ob die Sägen elektrisch oder mit einem Verbrennungsmotor angetrieben werden. Letzteres ermöglicht die Benutzung auch in Bereichen ohne Stromversorgung.

Mit der Vorrichtung können saubere, glatte und exakt vorgegebene Schnitte erzeugt werden, wobei insbesondere bei Leichtbaustoffen die Säge durch ihr Eigengewicht den notwendigen Sägedruck aufbringt und ohne Kraftaufwand durch die Bedienungsperson den Schnitt erzeugt. Die Schnittwinkel sowie der Ort des Schnittes können auf einfache Weise durch Anschläge bzw. Spindeln erzeugt werden. Einfache Spannvorrichtungen, die sich von Hand spannen lassen, ermöglichen eine perfekte Positionierung des Werkstücks auf der Vorrichtung und als Folge entsprechend präzise Schnitte.

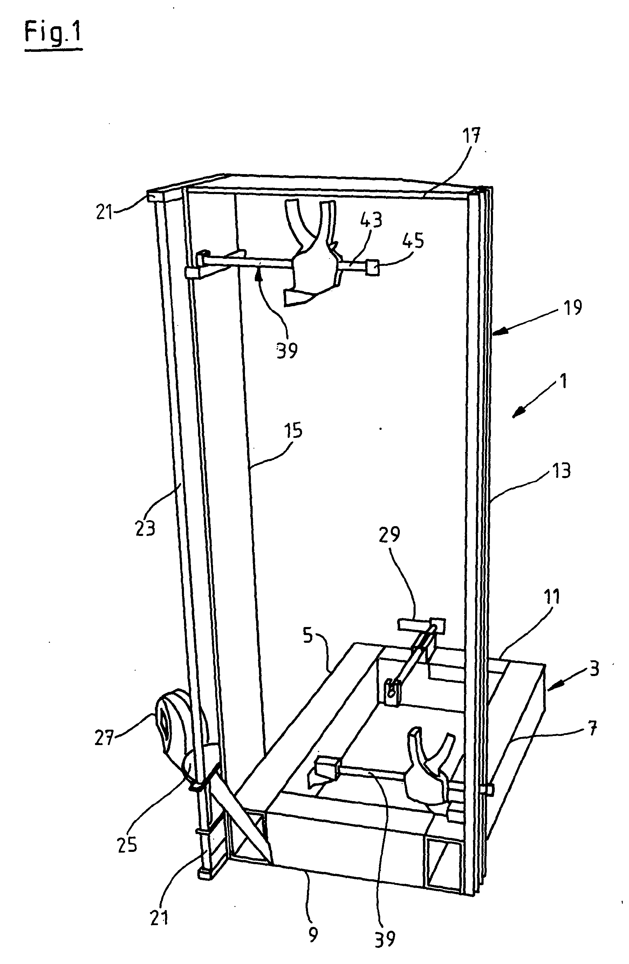

Anhand eines illustrierten Ausführungsbeispiels wird die Erfindung näher erläutert. Es zeigen
- Figur 1: eine perspektivische Ansicht der Vorrichtung zum Zuschneiden von Baumaterial mit einem Sockelrahmen und einem Portalrahmen sowie aufgesetztem Schneidwerkzeug,
- Figur 2: eine perspektivische Ansicht der Vorrichtung gemäss Figur 1 mit eingespanntem Werkstück,
- Figur 3: eine perspektivische Darstellung der Vorrichtung aus einem anderen Blickwinkel,

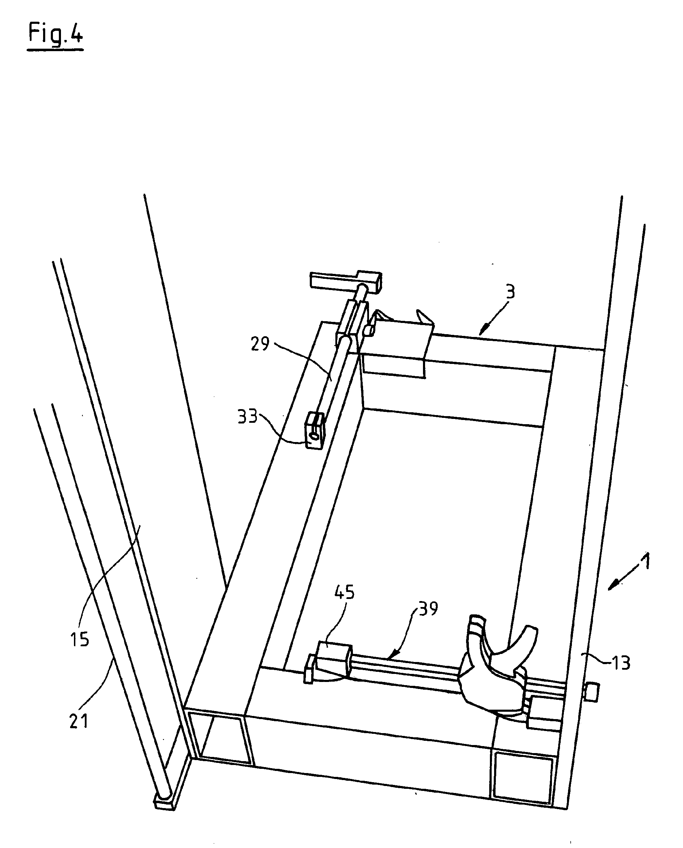

- Figur 4: eine Detailansicht des Sockelrahmens in perspektivischer Darstellung und
- Figur 5: eine perspektivische Darstellung mit einem Backstein als Werkstück.

In den Figuren ist mit Bezugszeichen 1 eine Vorrichtung zum Zuschneiden von Isolations- und Baumaterialien dargestellt. Die Vorrichtung 1 umfasst einen Sockelrahmen 3 mit zwei Längsholmen 5 und 7 und zwei Querholmen 9 und 11. Die Längs- und Querholme 5-11 sind vorzugsweise aus Stahl- oder Aluprofilen hergestellt und miteinander an deren Enden verbunden. Im Bereich des Querholms 9 sind vertikal dazu zwei Rahmensäulen 13,15 fest oder für den Transport lösbar befestigt. Eine der Rahmensäulen 13,15, nämlich diejenige, die neben Führungsstangen 23 für einen Werkzeugträger 25 liegt, ist als Platte ausgebildet, um eine grosse Auflagefläche für Werkstücke zu bilden. Die oberen Enden der Rahmensäulen 13,15 sind durch eine Verbindungsplatte 17 miteinander verbunden. Die beiden Rahmensäulen 13,15 und die Verbindungsplatte 17 bilden einen Portalrahmen 19.

An der breiteren Rahmensäule 13 sind zwischen zwei mit der Rahmensäule 15 fest verbundenen Profilen 21 parallel zur Längsausdehnung der Rahmensäule 15 und senkrecht zur Oberfläche des Sockelrahmens 3 die zwei Führungsstangen 23 befestigt.

Zwischen den beiden Führungsstangen 23 ist der Werkzeugträger 25 vertikal, d.h. in Richtung der Pfeile v, verschiebbar in Gleit- oder Rollenlagern befestigt. Am Werkzeugträger 25 ist eine Aufnahme- oder Befestigungsvorrichtung (nicht sichtbar) schwenkbar angelenkt. Mit der Befestigungsvorrichtung kann ein Schneidwerkzeug 27, z.B. ein elektrisch oder mit einem Verbrennungsmotor betriebener Fuchsschwanz, eine Säbelsäge, eine Pendelsäge oder eine Kettensäge, gehalten werden. Das Schwert 28 des Schneidwerkzeugs 27 ragt zwischen der Führungsstange 23 und der Rahmensäule 15 hindurch.

Am hinteren Querholm 11, der beabstandet zum Portalrahmen 19 liegt, ist mindestens eine Anschlagvorrichtung 29 angeordnet, welche einerseits am Querholm 11 mit einer Führungsplatte 31 zwischen den beiden Längsholmen 5,7 verschieb- und feststellbar ist und andererseits eine erste Anschlagplatte 33 aufweist, welche zwischen den beiden Querholmen 9 und 11 verschieb- und feststellbar ist. Die erste Anschlagplatte 33 ist am ersten Ende einer Anschlagstange 35 befestigt. Am zweiten Ende der Anschlagstange 35 ist eine rechtwinklig von der Anschlagstange 35 wegragende zweite Anschlagplatte 37 befestigt. Die Führungsstange der mindestens einen Anschlagvorrichtung 29 kann im Querschnitt rund oder mehreckig sein. Im weiteren kann auch am vorderen Querholm 9 eine Anschlagvorrichtung 29 angeordnet sein.

An mindestens einer der Rahmensäulen 13,15, vorzugsweise an beiden Rahmensäulen 13 und 15 sind Spannvorrichtungen 39 vertikal verschiebbar angeordnet. Jede Spannvorrichtung 39 umfasst einen Spannhebel 41, in welchem eine Spannstange 43 verschieb- und feststellbar befestigt ist. Am freien Ende der Spannstange 43 sitzt ein Spannklotz 45, welcher mit dem einzuspannenden Werkstück 47 in Anlage zu gelangen bestimmt ist.

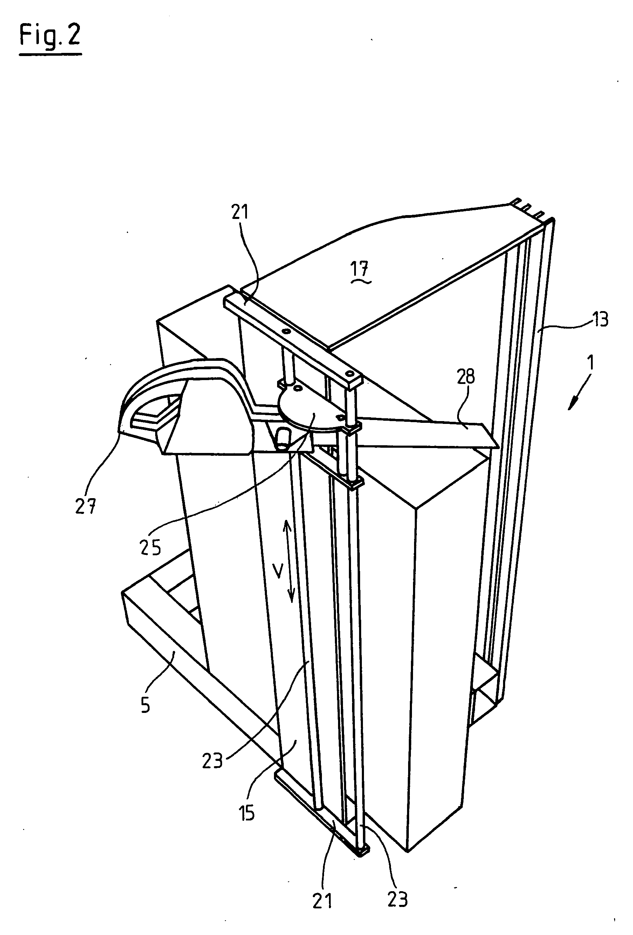

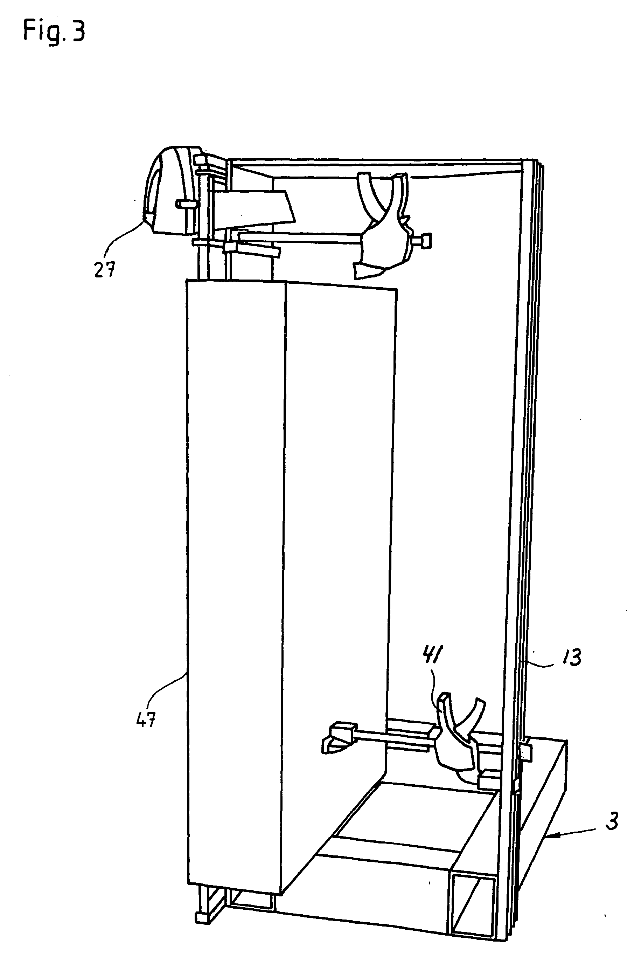

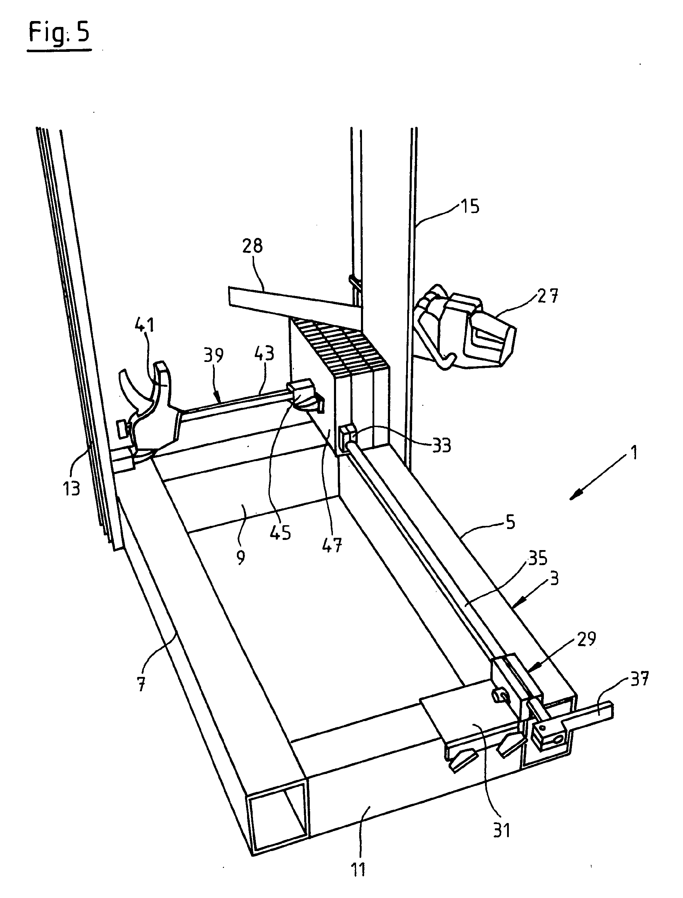

In den Figuren 2 und 3 ist das Werkstück 47 eine Isolierplatte mit geringem spezifischem Gewicht, in Figur 5 ist ein Backstein dargestellt. Der Vergleich zwischen den Werkstücken 47 in den Figuren 2 und 3 sowie in Figur 5 zeigt, dass in der Vorrichtung 1 sowohl grossdimensionierte Blöcke oder Platten als auch kleine Backsteine oder dergleichen mit geringen Ausmassen eingespannt und positioniert werden können. Die Positionierung erfolgt durch die Anschlagvorrichtung 29, an der der zu erzeugenden Schnittfläche gegenüberliegenden Fläche des Werkstücks 47 anliegt.

Nachfolgend wird kurz die Funktionsweise der Vorrichtung 1 erläutert.

Ein zu bearbeitendes Werkstück 47 wird auf den Sockelrahmen 3 aufgelegt, d.h. die Auflage erfolgt auf dem Querholm 9 und dem Längsholm 5. Danach wird das Werkstück 47 derart positioniert, dass das Schwert 29 des Werkzeugs 27 an die zu erzeugende Schnittfläche zu liegen kommt. Mit der Anschlagvorrichtung 29 wird die Position gegen ein Verschieben festgelegt. Danach wird mit einer oder mehreren Spannvorrichtungen 39 das Werkstück 47 an die Rahmensäule 15 angepresst. Nun kann, wenn das Werkzeug 27 bzw. dessen Schwert 29 die gewünschte Winkeleinstellung aufweist, das Werkzeug 27 in Betrieb gesetzt und durch sein Eigengewicht von oben nach unten durch das Werkstück 47 geführt werden. Selbstverständlich kann bei harten Werkstücken zusätzlich zur Gewichtskraft durch eine Bedienungsperson eine von oben nach unten gerichtete Kraft aufgewendet werden.

## Patentansprüche

1. Vorrichtung (1) zum Zuschneiden von Baumaterialien (47), wie Bausteine und Isolationsstoffplatten,
**gekennzeichnet durch**
einen Sockelrahmen (3) und einen Portalrahmen (19), der mit dem Sockelrahmen (3) verbunden ist, einen am Portalrahmen (19) vertikal verfahrbarer Werkzeugträger (25) zur Aufnahme eines Schneidwerkzeugs (27) sowie Mittel (29,39) zum Festhalten und Positionieren des Baumaterials (47) während des Schneidvorgangs bezüglich des Schneidwerkzeugs (27).

2. Vorrichtung nach Anspruch 1, **dadurch gekennzeichnet, dass** der Werkzeugträger (25) an einer Vertikalführung oder an einer der Rahmensäulen (15) des Portalrahmens (19) oder einer vom Portalrahmen (19) unabhängigen Führungsstange (23) verschieb- und feststellbar angeordnet ist.

3. Vorrichtung nach Anspruch 2, **dadurch gekennzeichnet, dass** der Werkzeugträger (25) eine um eine vertikale Achse schwenkbare Werkzeugaufnahme umfasst, an der das Schneidwerkzeug (27) aufsetz- und fixierbar ist.

4. Vorrichtung nach einem der Ansprüche 1 bis 3, **dadurch gekennzeichnet, dass** am Sockelrahmen (3) und/oder am Portalrahmen (19) mindestens eine verstellbare Anschlagplatte (45) befestigt ist, mit der das zu bearbeitende Werkstück (47) im gewünschten Abstand zum Schneidwerkzeug (27) positionierbar ist.

5. Vorrichtung nach Anspruch 4, **dadurch gekennzeichnet, dass** die Anschlagplatte (45) auf einer Anschlagstange (35) mit einer Anschlagvorrichtung (29) in der eingestellten Position feststellbar ist.

6. Vorrichtung nach einem der Ansprüche 1 bis 5, **dadurch gekennzeichnet, dass** am Portalrahmen (19) mindestens eine Spannvorrichtung (39) zum Verspannen des Werkstücks (47) an einer der einander gegenüberliegenden Rahmensäulen (15) angeordnet ist.

7. Vorrichtung nach Anspruch 6, **dadurch gekennzeichnet, dass** die Spannvorrichtung (39) vertikal verschieb- und feststellbar an einer oder beiden Rahmensäulen (13,15) angeordnet ist.

8. Vorrichtung nach einem der Ansprüche 6 oder 7, **dadurch gekennzeichnet, dass** an der Spannvorrichtung (39) ein Spannklotz (45) mit einem Spannhebel (41) positionierbar befestigt ist.

9. Vorrichtung nach einem der Ansprüche 1 bis 8, **dadurch gekennzeichnet, dass** der Werkzeugträger (25) über Rollen- oder Gleitlager auf der Vertikalführung an einer Rahmensäule (15) oder einer unabhängigen Führungsstange (23) gelagert ist, derart, dass das Schneidwerkzeug (27) durch das Eigengewicht des Werkzeugträgers (25) und des Schneidwerkzeugs (27) den Schneiddruck auf das Werkstück (47) ausübt.

10. Vorrichtung nach einem der Ansprüche 1 bis 9, **dadurch gekennzeichnet, dass** als Schneidwerkzeug (27) eine handelsübliche Fuchschwanz-, Pendel- oder Säbelsäge oder eine Kettensäge auf dem Werkzeugträger (25) befestigbar ist.
